# EUROPEAN PATENT SPECIFICATION

(11) **EP 4 543 780 B1**
(45) Date of publication and mention of the grant of the patent: **25.03.2026**
(21) Application number: 23736201.7
(22) Date of filing: 19.06.2023
(51) Int. Cl.: B65D 75/58, B32B 3/26, B32B 7/12, B32B 15/085, B32B 15/20, B32B 27/08, B32B 27/10, B32B 29/08, B32B 27/32, B32B 27/30

(54) **SEALED SINGLE -DOSE PACKAGE FOR LARGE PRODUCT SIZES**
VERSIEGELTE EINZELDOSIS-VERPACKUNG FÜR GROSSE PRODUKTGRÖSSEN
EMBALLAGE UNIDOSE SCELLÉ POUR LES PRODUITS DE GRANDE TAILLE

(30) Priority: 22.06.2022 IT 202200013183
(43) Date of publication of application: 30.04.2025
(73) Proprietor: Easysnap Technology S.r.l., 15073 Castellazzo Bormida (AL) (IT)
(72) Inventor: TAGLINI, Andrea, 15073 Castellazzo Bormida, ALESSANDRIA (IT); DI GIROLAMO, Tomas, 15073 Castellazzo Bormida, ALESSANDRIA (IT)
(74) Representative: Gualeni, Nadia
(86) International application number: PCT/IB2023/056324
(87) International publication number: WO 2023/248102

(56) References cited:
- US-A1- 2007 138 204
- US-A1- 2018 208 344
- US-A1- 2021 053 736

## Description

The present invention relates to the field of packaging and in particular to the field of sealed single-dose packages with a break opening of the "one hand opening" type, i.e. which may be opened by bending the package with one hand.

These packages, by virtue of the indisputable practicality of use thereof, have become considerably widespread; currently, several hundreds of millions of packages of this type are marketed every year in many industries, for example for food products, such as sauces and other condiments, and pharmaceutical products, such as eye drops and dermatological creams. An example of such a package is shown in US 2021/053736 A1.

For packages intended for large sizes, it has been noted that when there is a large amount of product present, they offer resistance when bending, making it difficult to open the package.

The object of the present invention is to make a package that ensures proper opening especially for large sizes, so that even with large quantities of product, bending for opening is easy.

Given the widespread use of such packages and a profound change in the attitudes of consumers towards the issues of sustainability and environmental protection, the problem of the correct disposal of used packages is now particularly felt. Such packages are substantially made from film consisting of a plastics material, and therefore the consumer is now particularly careful when it comes to the purchasing thereof. Furthermore, after use, it is necessary that they be recycled.

It is also the object of the present invention to make a package that ensures proper opening for large sizes and that is predominantly paper-, cardboard-, or cellulose-based.

The object of the present invention is to provide a sealed single-dose package with break opening which meets the needs of the field and at the same time overcomes the aforementioned drawbacks.

Such an object is achieved by a sealed single-dose package with a break opening according to claim 1. The dependent claims disclose further advantageous embodiments of the invention.

The features and advantages of the package according to the present invention will appear more clearly from the following description, given by way of non-limiting example with reference to the drawings of the accompanying figures, in which:
- Fig. 1 shows a sealed single-dose package according to an embodiment of the present invention, shown from the front;
- Fig. 2 shows the rear face of a semi-rigid sheet of the package, according to one embodiment of the invention;

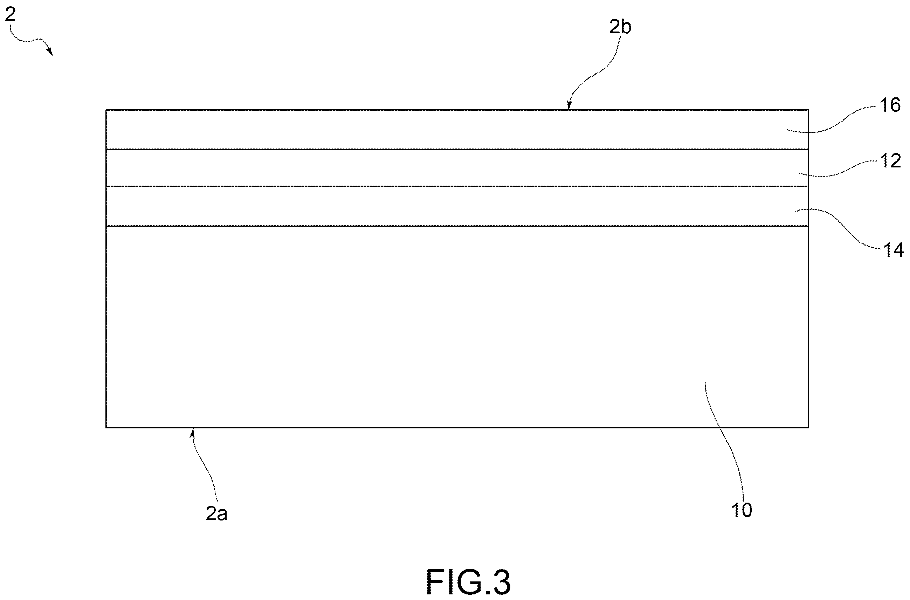

- Fig. 3 shows an example diagram of the multi-layer structure of a semi-rigid sheet of the package according to one embodiment of the invention;
- Fig. 4 shows the front face of a semi-rigid sheet of the package, according to one embodiment of the invention;
- Fig. 5a and 5b show further embodiments of the rear face of the semi-rigid sheet of the package;
- Fig. 6a and 6b show some embodiments of the semi-rigid sheet of the package;
- Fig. 7a to 7c show further embodiments of the semi-rigid sheet of the package;
- Fig. 8 shows a sealed single-dose package according to a further embodiment of the present invention, shown from the front;
- Fig. 9 shows another embodiment of the semi-rigid sheet of the package, in the case of a carrier layer made of paper, cardboard or other predominantly cellulose-based material;
- Fig. 10a and 10b show the front and back sides of a single-dose sealed package, respectively, according to yet another embodiment of the present invention.

With reference to the figures of the accompanying tables, reference numeral 1 denotes a sealed single-dose package with a break opening.

The package 1 comprises a semi-rigid sheet 2, delimited by a peripheral edge 3 and having a rear face 2a and an opposite front face 2b, and a flexible sheet 4, having an inner face 4a and an outer face 4b. The flexible sheet 4 is superimposed on the semi-rigid sheet 2, so that the inner face 4a faces the front face 2b, and welded thereto, so as to form an inner pocket 6 for containing one dose of a product.

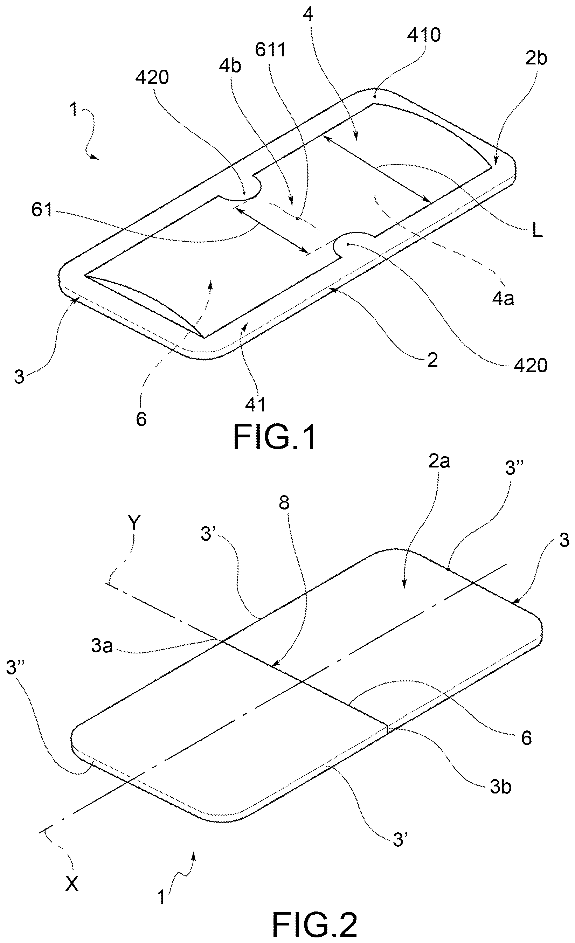

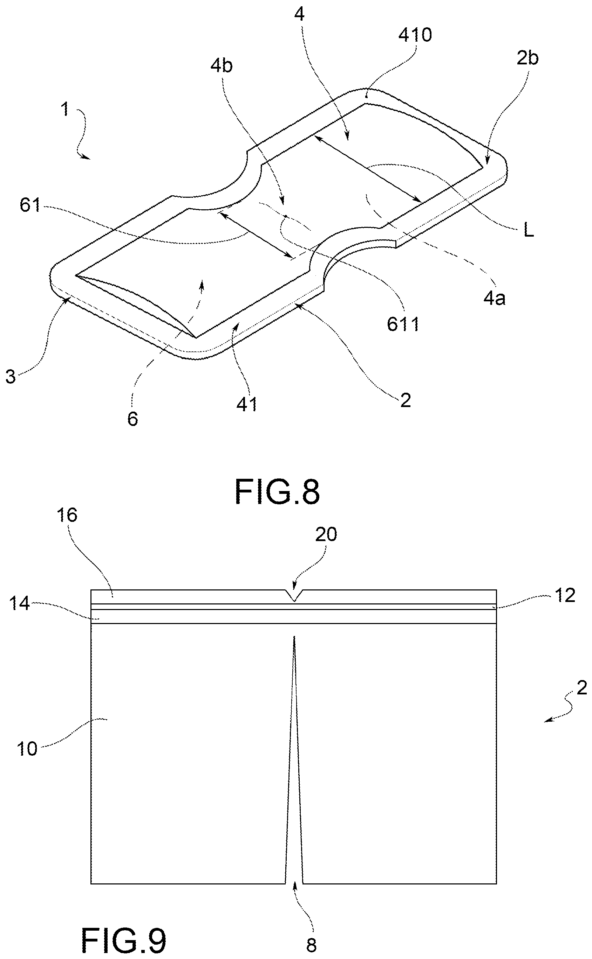

Advantageously, the single-dose sealed package 1 according to the present invention has a pocket 6 equipped with a narrow portion 61, centrally arranged and aligned with the outer incision 8 of the semi-rigid sheet 2. Preferably, the narrow portion 61 has a width between 20% and 95% of the maximum width L of the pocket 6. The pocket 6 thus has a substantially hourglass shape, as seen in Fig. 1 and 8.

In the example embodiment in Fig. 1, the package 1 has a rectangular shape, and the pocket 6 has an hourglass shape, obtained through a pair of protruding welds 420 as described below.

In the example embodiment in Fig. 8, both the package 1 and the pocket 6 have hourglass shapes, achieved by a peripheral weld 410. As may be noted, the semi-rigid sheet 2 has a pair of weakened portions consisting of recesses obtained along a peripheral edge 3, arranged centrally with respect to the package 1. In this example, the recesses are in the shape of a semicircle.

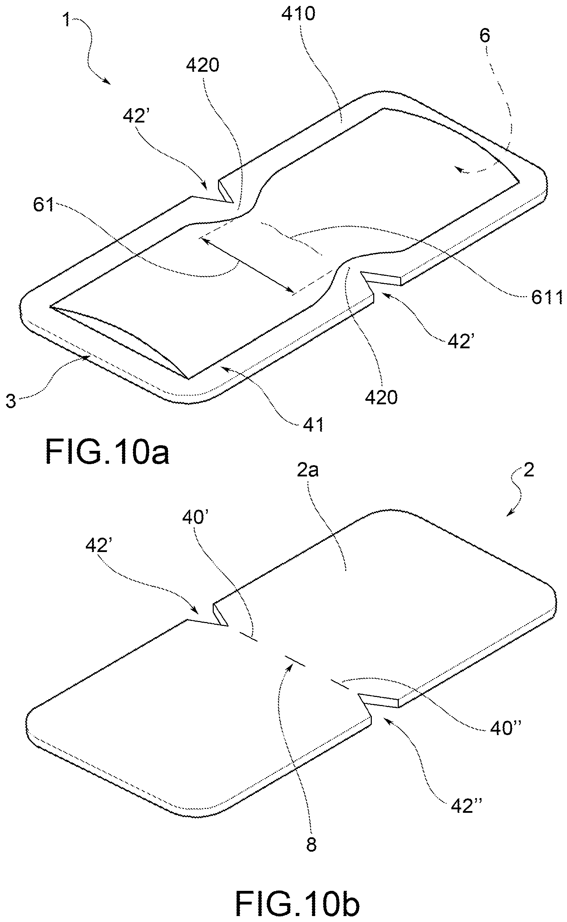

In the example embodiment in Fig. 10a, both the package 1 and the pocket 6 have hourglass shapes. As may be noted, the semi-rigid sheet 2 has a pair of weakened portions comprised of recesses made along a peripheral edge 3. As may be seen, two recesses 42', 42" are provided, aligned with the outer incision 8 and arranged centrally with respect to the package 1. In this example, the recesses are triangular, with the tip facing and aligned with the outer incision 8, as shown in Fig. 10b. The pocket 6 has an hourglass shape, obtained through a pair of protruding welds 420, as seen in Fig. 10a. The protruding welds 420 are arranged between the recesses 42', 42" and the narrow portion 61.

The presence of the narrow portion 61, and thus the substantially hourglass shape of the pocket 6, allows for a kind of division of the product content in said pocket 6 to be obtained. Thus, when the package 1 is folded to obtain the opening, the contents of the pocket 6 are already substantially divided into two parts and do not hinder, by its presence at the outer incision 8, the bending of the package. This solution is particularly advantageous for large sizes, wherein the package contains a large amount of product, which with its volume could make bending for opening difficult. Too large a narrow portion would have no effect on the bending of the package 1. Preferably, the narrow portion 61 has a maximum width of less than 95% of the maximum width L of the pocket 6. Conversely, a narrow portion that is too narrow would eventually hinder the flow of the product, which would be trapped without being able to escape properly during dispensing. Preferably, the narrow portion 61 has a minimum width greater than 20% of the maximum width L of the pocket 6.

The narrow portion 61 is aligned with the outer incision 8 of the semi-rigid sheet 2 to facilitate the opening of the package when bending the package itself.

Preferably, the narrow portion 61 is arranged centrally to the pocket 6, which takes on an hourglass shape, as in Fig. 1 and 8.

Preferably, the flexible sheet 4 has a crease 611, i.e. a fold, at the narrow portion 61.

Preferably, the semi-rigid sheet 2 has a pair of weakened portions, arranged so as to face each other, at the narrow portion 61 of the pocket 6 and aligned with the outer incision 8. For example, each weakened portion consists of a recess obtained along a peripheral edge 3 of the semi-rigid sheet 2, and wherein said weakened portions are arranged centrally with respect to the package, which takes an hourglass shape, as in Fig. 8 and Fig. 10a, arranged centrally with respect to the package 1. The recesses have, for example, a semicircular or triangular shape with a tip facing and aligned with the outer incision 8.

The flexible sheet 4 is welded to the semi-rigid sheet 2 by a weld 41 that extends around the peripheral edge 3. The weld 41 forms the outline of the pocket 6.

The weld 41 comprises a peripheral portion 410 that completely follows the peripheral edge 3, preferably continuously, without interruption, and preferably always with the same thickness. This example is shown in Fig. 1 and 8.

Preferably, as in the example in Fig. 1 and 10a, the weld 41 comprises at least one protruding portion 420 which extends toward the pocket 6, beyond the contour of the peripheral weld 410. Preferably, the weld 41 comprises two protruding portions 420, arranged opposite each other, as shown in Fig. 1. The protruding portions 420 of the weld form the narrow portion 61 of the pocket 6.

The protruding portion 420 is aligned with an outer incision 8 made in the semi-rigid sheet 2 and better described hereinafter. Preferably, the weld 41 comprises two protruding portions 420 arranged on both sides of the outer incision 8.

Preferably, the protruding portion 420 is arranged substantially in the central portion of the long side 3' of the semi-rigid sheet 2.

The protruding portion 420 may have different shapes, such as semicircular as in Fig. 1, or oval, or triangular as in Fig. 10a, or rectangular, or other polygonal or non-polygonal shape.

The protruding portion 420 preferably has a substantially semicircular shape, or at least curved and convex, to prevent some of the product from being trapped and not escaping properly during dispensing.

The presence of the protruding portion 420 of the weld 41 results in the formation of a narrow portion 61 in the pocket 6. In the case of two protruding portions 420 facing each other, the pocket 6 takes on a substantially hourglass contour, with a central narrow portion 61.

Preferably, the narrow portion 61 of the pocket 6 is obtained in the following way:
- making a part of the peripheral portion 410 of the weld 41 to partially join the flexible sheet 4 and the semi-rigid sheet 2 so as to partially form the pocket 6, thus making a cavity capable of containing the product, but still open and accessible from the outside;
- inserting a predetermined amount of product into the pocket 6;
- completing the peripheral portion 410 of the weld 41 to join the flexible sheet 4 and the semi-rigid sheet 2 to fully form the pocket 6, thus making a sealed cavity, filled with product, and not accessible from the outside;
- completing the weld 41 by making at least one protruding portion 420, preferably a pair of protruding portions 420.

The solution of forming the protruding portions 420 of the weld when the pocket 6 is already filled with product provides a double benefit. First, it avoids reducing the capacity of the pocket 6 and thus of the container; it also allows the product inside the pocket 6 to be compressed, so that said product increases the stiffness of the container and promotes bending in the center.

The solution of making the protruding portions 420 of the weld when the pocket 6 is already filled with product allows for a crease 611, i.e., a fold, to be obtained in the flexible sheet 4 that further facilitates the bending of the package 1 when opening. The presence of the crease 611 in the flexible sheet 4 allows for the division of the product content in said pocket 6 to be accentuated. This solution is particularly advantageous for large sizes, wherein the package contains a large amount of product, which with its volume could make bending for opening difficult.

Preferably, the crease 611 is a straight, continuous fold in the flexible sheet 4.

Preferably, the crease 611 in the flexible sheet 4 is aligned with the outer incision 8.

Preferably, the crease 611 in the flexible sheet 4 is arranged between the two protruding portions 420.

Preferably, the crease 611 in the flexible sheet 4 is arranged centrally to the narrow portion 61.

The package according to the present invention is particularly suitable for holding large quantities of product, such as 10 ml to 25 ml of product. For example, 12 ml of product in an 80mmX60mm size, or 18 ml of product in a 100mmX60mm size, or 20 ml of product in a 100mmX66mm size, or 25 ml of product in a 100mmX80mm size.

According to an example embodiment, the semi-rigid sheet 2 has a rectangular shape and has opposite long sides 3' and opposite short sides 3"; the semi-rigid sheet 2 extends along a longitudinal axis X parallel to the long sides 3'.

The semi-rigid sheet 2, which, for example, has a thickness of between 300 - 750 microns overall, is a multi-layer laminate comprising a carrier layer 10 having said rear face 2a. The carrier layer 10, which is mono-layer or multi-layer, is made of plastics, or paper, cardboard or another predominantly cellulose-based material (i.e. cellulose-based for at least 50% by weight). The carrier layer 10 has, for example, a thickness of between 250 - 700 microns.

Preferably, internally, the semi-rigid sheet 2 comprises a barrier layer 12 suited for providing a barrier against the passage of gas, and in particular against the passage of oxygen, or vapor, or gas and vapor.

For example, the barrier layer 12 is mono-layer or multi-layer, in aluminum or EVOH (ethylene vinyl alcohol), or combinations thereof. In those variants wherein the barrier layer is multi-layer, some films may be made from non-barrier materials.

Alternatively, the carrier layer 10 has a film coated onto the face opposite the front face 2a, wherein said coated film has barrier properties.

Alternatively, the carrier layer 10 is subjected to chemical treatment so as to cause it to assume barrier properties, at least upon the face opposite to the rear face 2a. Alternatively, a metallized film, for example metallized PET or metallized PE, is glued to the carrier layer 10, wherein the metallization faces towards the paper.

On the opposite side of the rear face 2a, and preferably between the carrier layer 10 and the barrier layer 12, the semi-rigid sheet 2 also comprises at least one intermediate layer 14, which is mono-layer or multi-layer, comprising an adhesive or an extruded polymer, for example polyethylene or polypropylene, or another material that binds with the carrier layer 10.

Furthermore, the semi-rigid sheet 2 comprises a final layer 16 having said front face 2b. The final layer 16, which is mono-layer or multi-layer, comprises polyethylene or polypropylene or a solder varnish or another material that is suitable for being welded to the flexible film 4.

The flexible sheet 4 is a multi-layer laminate comprising an inner layer having said inner face 4a. The inner layer, which is mono-layer or multi-layer, comprises polyethylene or polypropylene or a solder varnish or another material suitable for being welded to the semi-rigid film 2.

Externally, the flexible sheet 4 comprises an outer layer having said outer face 4b. The outer layer 32, which is mono-layer or multi-layer, comprises paper, cardboard or another material predominantly cellulose-based.

Furthermore, the flexible sheet 4 preferably comprises an intermediate layer arranged between the inner layer and the outer layer. For example, the intermediate layer, which is mono-layer or multi-layer, has barrier properties and comprises aluminum or EVOH, and/or has binding properties with the inner layer 30 and with the outer layer 32. Alternatively, the outer layer has a film coated upon the face opposite the outer face 4b, wherein said coated film has barrier properties. Or, a metallized film is glued on the outer layer, such as metallized PET or metallized PE, wherein the metallization is facing the paper.

According to an embodiment variant, the flexible sheet 4 has no intermediate layer and the inner layer is directly in contact with the outer layer.

In a preferred example embodiment, the package 1 is predominantly paper, cardboard, or other predominantly cellulose-based material. In this example, overall, the paper, cardboard or other predominantly cellulose-based material of the semi-rigid sheet and the paper, cardboard or other predominantly cellulose-based material of the flexible sheet together constitute at least 60% by weight of the entire (empty) package.

As shown in Fig. 2, the rear face 2a of the semi-rigid sheet 2, at the pocket 6, has an outer incision 8 extending along an incision direction Y, which is for example transversal, i.e., in the aforesaid embodiment, it extends along a direction incident to the longitudinal axis X, preferably orthogonal thereto. The outer incision 8 is adapted to guide, upon a bending of the package 1, a controlled breakage of the semi-rigid sheet 2 along said incision so as to cause the formation, through said semi-rigid sheet, of an opening for the product contained in the pocket 6 to escape.

For example, as in Fig. 2, the outer incision 8 joins two opposite points 3a, 3b of the peripheral edge 3; in the aforesaid embodiment, this means that it extends over the entire width of the rectangular semi-rigid sheet.

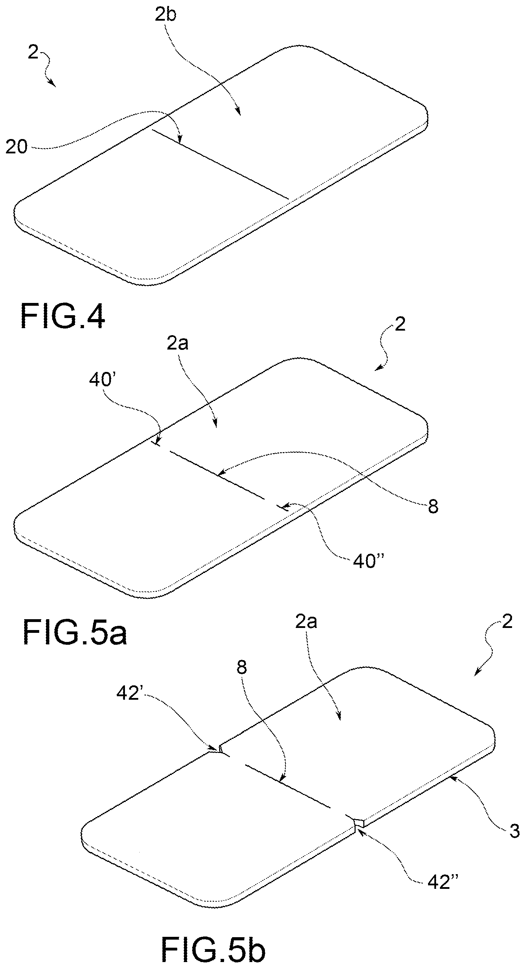

According to a further embodiment variant, as in Fig. 4, the outer incision 8 is interrupted before the peripheral edge 3, or it starts from a point on the peripheral edge 3 and is interrupted before reaching the other point of the peripheral edge 3.

The outer incision 8 partially cuts across the carrier layer 10 of the semi-rigid sheet 2.

Said incision has a depth H with respect to the front face 2a that is typically variable transversely along the outer incision 8. For example, the depth is greatest in a central segment of the incision. Advantageously, this variation in depth along the incision ensures the break opening in a controlled manner, preventing the break from being sudden and therefore preventing the product from being projected outwards in a damaging manner.

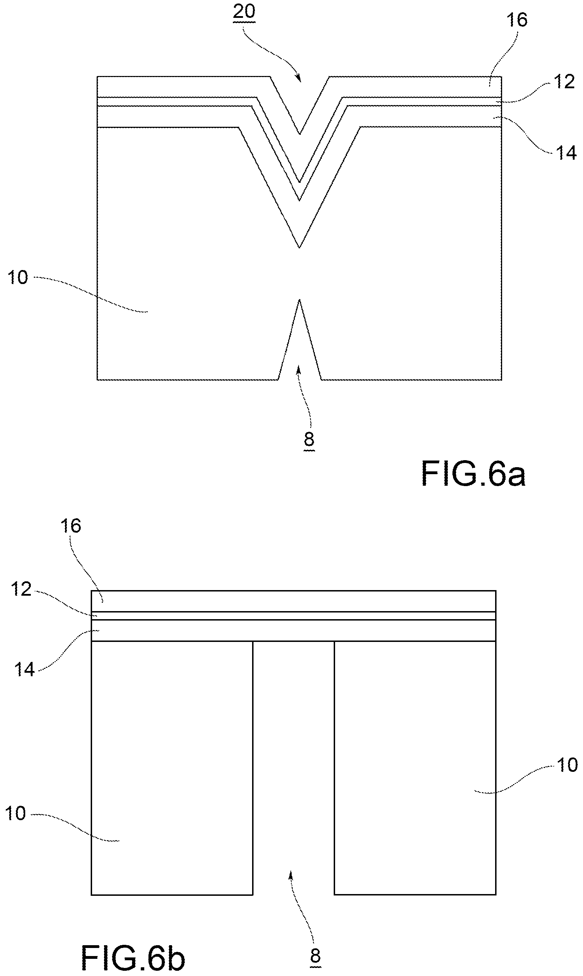

In one example embodiment, the outer incision 8 has a constant cross-section as the depth varies, as in the example of Fig. 6b, wherein it has a rectangular or square cross-section.

In one example embodiment, the outer incision 8 has a tapered cross-section, as in the example of Fig. 6a, wherein it has a triangular cross-section with the tip towards the carrier layer 10.

As shown in Fig. 4, on the front face 2b of the semi-rigid sheet 2, i.e., the face that at least partially defines the inner pocket 6 in which the product is contained, there is an inner incision 20 that extends along an incision direction Y, which is, for example, transversal, i.e., in the above embodiment, along a direction incident to the longitudinal axis X, preferably orthogonal thereto.

In the embodiment of Fig. 6a, the inner incision 20 does not cut across the barrier layer 12, which remains intact. In this embodiment, the inner incision 20 is a more or less sharp depression, without material breakage, due to permanent compression of the material.

In the embodiment of Fig. 9, the inner incision 20 does not cut across the barrier layer 12, which remains intact. In this embodiment, the inner incision 20 is a true incision, cutting into the material.

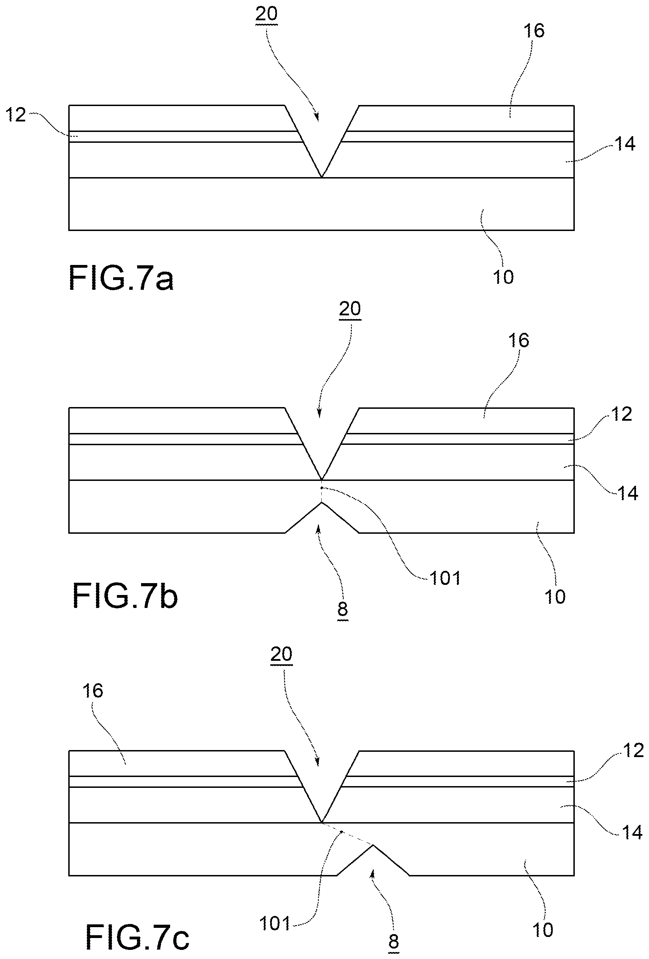

In the embodiments of Fig. 7a to 7c, the inner incision 20 cuts across the barrier layer 12 that is interrupted by an extremely small micro-hole. Preferably, the micro-hole 201 makes an opening in all of the layers of the semi-rigid sheet 2, with the exception of the paper layer. Preferably, the micro-hole 201 at least partially follows the geometry of the inner incision 20. The micro-hole 201 serves to trigger the breaking of the barrier layer 12, and to promote the breaking of any further elastic layers (the intermediate layer 14 and final layer 16 where present) of the rigid sheet 2, during the bending of the package. In fact, unlike the paper carrier layer 10, the barrier layer 12 is elastic and tends to elongate rather than break, so as to prevent in some cases the correct opening of the package. The micro-hole 201, therefore, ensures the propagation of the cracking on the barrier layer 12 during the bending of the package, which then opens correctly. Preferably, the micro-hole 201 is separated from the outer environment by the interposition of a portion of the paper carrier layer 10, referred to as the barrier portion 101. Preferably, the barrier portion 101 of the paper carrier layer 10 has a minimum thickness of 10 microns. It should be noted that the paper that makes up the carrier layer 10 does not have barrier properties to the passage of gas and/or vapor, or in any case not significant properties. The extremely small size of the micro-hole 201 does however mean that the surface of the carrier layer 10, which in effect remains without a barrier layer 12, is so small that it is irrelevant to the shelf life of the product. This example embodiment is particularly suitable for dense fluid products, insofar as they are not absorbed by the paper, cardboard or cellulose barrier layer 10.

In an example embodiment, the inner incision 20 has a constant cross-section as the depth changes, and for example has a rectangular or square cross-section.

In one embodiment, the inner incision 20 has a tapered cross-section, as in the examples of Fig. 7a to 7c, wherein it has a triangular cross-section with the tip toward the carrier layer 10.

According to an embodiment shown in Fig. 6a and 7b and 9, the inner incision 20 is aligned, i.e. completely superimposed, with the outer incision 8.

Preferably, in the case of a carrier layer 10 made of paper, cardboard, or other predominantly cellulose-based material, the outer incision 8 is very deep, almost to the barrier layer 12.

According to an embodiment shown in Fig. 7c, the inner incision 20 is misaligned, i.e. not completely superimposed, with the outer incision 8.

According to a further embodiment variant (Fig. 5a and 5b and 10b), the semi-rigid sheet 2, in order to facilitate the bending of the package, has at least one weakened portion that is separate from and preferably aligned with the outer incision 8. Preferably, the weakened portions are arranged at the protruding portions 420 of the weld 41. Preferably, the weakened portions are aligned with the inner incision 20.

Preferably, the rear face 2a of the semi-rigid sheet 2 has at least one weakened portion.

Preferably, in the case of weakened portions, these are made at a protruding portion 420 of the weld 41.

For example, as in Fig. 5a and 10b, the rear face 2a has two weakened portions 40', 40" aligned with the outer incision 8, arranged on either side of central outer incision 8. In this example, the outer incision 8 is interrupted before the peripheral edge 3. Said weakened portions have a depth less than or equal to that of the outer incision 8.

Preferably, each weakened portion consists of at least one incision (Fig. 5a). According to one embodiment variant, each weakened portion consists of a plurality of holes.

Alternatively (Fig. 5b), each weakened portion consists of a recess obtained along the peripheral edge 3 of the semi-rigid sheet 2. For example, two recesses 42', 42" are provided, aligned with the inner incision 8. In this example, the outer incision 8 is interrupted before the peripheral edge 3.

In the example in Fig. 10b, the package has both two weakened portions 40', 40", aligned with the outer incision 8, and two recesses 42', 42", aligned with the outer incision 8. Said weakened portions 40', 40" may have a depth less than or equal to that of the outer incision 8. Said recesses 42', 42" preferably have a triangular shape with the tip aligned with the outer incision 8. Preferably, the weakened portions 40', 40" and the recesses 42', 42" are aligned with the inner incision 20.

Further embodiments of the invention are now described.

According to one embodiment, the inner incision 20 of the carrier layer has a constant depth.

According to one embodiment, the outer incision 8 of the carrier layer has a constant depth.

According to an embodiment variant of the package according to the invention, the semi-rigid sheet 10 has a circular or oval shape or a regular or mixed polygonal shape, i.e., consisting of rectilinear sections and arched sections.

Innovatively, the package according to the present invention simultaneously ensures proper opening especially for large sizes, wherein the package contains a large amount of product that could make bending for opening difficult.

Advantageously, in fact, the solution of making an essentially hourglass-shaped pocket, i.e., equipped with a narrow portion, facilitates the bending of the package when opening as it forms a kind of division of the product content in the pocket.

It is clear that a person skilled in the art, in order to satisfy contingent needs, could make modifications to the package described above, said modifications all being contained within the scope of protection defined in the following claims.

## Claims

1. A sealed single-dose package (1) with break opening, comprising:
- a multi-layer semi-rigid sheet (2) having a rear face (2a) and an opposite front face (2b), and comprising a carrier layer (10) having said rear face (2a), said carrier layer (10) being made of paper, cardboard or other predominantly cellulose-based material;
- a flexible sheet (4), having an inner face (4a) and an outer face (4b), superimposed on the semi-rigid sheet (2) so that the inner face (4a) faces the front face (2b), and welded to the front face (2b) of the semi-rigid sheet (2) so as to form an inner pocket (6) for containing one dose of a product;
- an outer incision (8) extending along an incision direction (Y), made in the rear face (2a) of the semi-rigid sheet (2), adapted to guide, upon a bending of the package, a breakage of the semi-rigid sheet (2) to form an opening for the product contained in the pocket (6) to escape;
- an inner incision (20) extending along an incision direction (Y), made in the front face (2b) of the semi-rigid sheet (2);
**characterized in that** the pocket (6) has a narrow portion (61) aligned with said outer incision (8), and **in that** said flexible sheet (4) comprises an outer layer (32) having said outer face (4b), said outer layer (32), which is single-layer or multi-layer, comprises paper, cardboard or other predominantly cellulose-based material.

2. A sealed single-dose package (1) according to claim 1, wherein the inner incision (20) is aligned, superimposed, with the outer incision (8).

3. A sealed single-dose package (1) according to claim 1 or 2, wherein the flexible sheet (4) has a crease (611), i.e., a fold, at the narrow portion (61).

4. A sealed single-dose package (1) according to any one of the preceding claims, wherein the semi-rigid sheet (2) has a pair of weakened portions (40',40";42',42") at the narrow portion (61) of the pocket (6), aligned with the outer incision (8), on both sides of the outer incision.

5. A sealed single-dose package (1) according to claim 4, wherein each weakened portion consists of at least one incision (40', 40").

6. A sealed single-dose package (1) according to claim 4, wherein each weakened portion consists of a recess (42', 42") obtained along a peripheral edge (3) of the semi-rigid sheet (2), and wherein said weakened portions are arranged centrally with respect to the package, which takes an hourglass shape.

7. A sealed single-dose package (1) according to claim 4, wherein the semi-rigid sheet (2) has a pair of weakened portions in the form of recesses (42',42") followed by a pair of weakened portions in the form of incisions (40' ,40"), both the incisions (40',40") and the recesses (42' 42") being aligned with the outer incision (8), on both sides of the outer incision.

8. A sealed single-dose package (1) according to claim 6 or 7, wherein said recesses (42',42") are triangular in shape with the tip pointing toward the outer incision (8).

9. A sealed single-dose package (1) according to any one of the preceding claims, wherein the flexible sheet (4) is welded to the semi-rigid sheet (2) by a weld (41) comprising a peripheral portion (410) which follows the peripheral edge (3) of the semi-rigid sheet (2) and a pair of protruding portions (420), said protruding portions (420) are arranged facing each other, are aligned with said outer incision (8) made in the semi-rigid sheet (2), and extend towards the pocket (6) which takes an hourglass shape.

10. A sealed single-dose package (1) according to claim 9 when dependent on claim 4, wherein said weakened portions (40',40";42',42") are made at the protruding portions (420) of the weld (41).

11. A sealed single-dose package (1) according to any one of the preceding claims, wherein the semi-rigid sheet (2) comprises a barrier layer (12) suited for forming a barrier to the passage of gas and/or vapor.

12. A sealed single-dose package (1) according to claim 11, wherein the barrier layer (12) has a micro-hole separated from the external environment by the interposition of a portion of the barrier layer (10).

13. A sealed single-dose package (1) according to any one of the preceding claims, wherein the pocket (6) has a maximum width (L), and the narrow portion (61) has a width between 20% and 95% of the maximum width (L).

14. A method for making a sealed single-dose package (1) according to claim 1, comprising the steps of:
- arranging a rectangular multi-layer semi-rigid sheet (2) delimited by a peripheral edge (3) and having a rear face (2a) and an opposite front face (2b), said semi-rigid sheet (2) having an outer incision (8) made on the rear face (2a);
- arranging a flexible sheet (4) having an inner face (4a) and an outer face (4b);
- superimposing the flexible sheet (4) on the semi-rigid sheet (2) so that the inner face (4a) faces the front face (2b);
- welding the flexible sheet (4) to the semi-rigid sheet (2) by a weld (41) obtained according to the following sub-steps:
-- at least partially making a peripheral portion (410) of the weld (41) to partially join the flexible sheet (4) and the semi-rigid sheet (2) to partially form the pocket (6);
- inserting a predetermined amount of product into the pocket (6);
- completing the peripheral portion (410) of the weld (41) to completely close the pocket (6);
- completing the weld (41) by making at least one protruding portion (420) towards the pocket (6).

## Patentansprüche

1. Versiegelte Einzeldosis-Verpackung (1) mit Bruchöffnung, umfassend:
- eine mehrschichtige halbstarre Folie (2) aufweisend eine Rückfläche (2a) und eine gegenüberliegende Vorderfläche (2b), und umfassend eine Trägerschicht (10) aufweisend die Rückfläche (2a), wobei die Trägerschicht (10) aus Papier, Karton oder einem anderen überwiegend zellulosebasierten Material besteht;
- eine flexible Folie (4) aufweisend eine Innenfläche (4a) und eine Außenfläche (4b), die auf der halbstarren Folie (2) übereinandergelegt werden, sodass die Innenfläche (4a) der Vorderfläche (2b) zugewandt ist, und mit der Vorderfläche (2b) der halbstarren Folie (2) verschweißt wird, um eine innere Tasche (6) zur Aufnahme einer Dosis eines Produkts zu bilden;
- einen äußeren Einschnitt (8), der sich entlang einer Einschnittsrichtung (Y) erstreckt, der an der Rückfläche (2a) der halbstarren Folie (2) ausgebildet wird und der eingerichtet ist, beim Biegen der Verpackung, einen Bruch der halbstarren Folie (2) zu führen, um eine Öffnung zu bilden, sodass das Produkt, das in der Tasche (6) enthalten ist, austreten kann;
- einen inneren Einschnitt (20), der sich entlang einer Einschnittsrichtung (Y) erstreckt, der an der Vorderfläche (2b) der halbstarren Folie (2) ausgebildet wird;
**dadurch gekennzeichnet, dass** die Tasche (6) einen schmalen Abschnitt (61) aufweist, der mit dem äußeren Einschnitt (8) ausgerichtet ist, und dass die flexible Folie (4) eine äußere Schicht (32) aufweisend eine Außenfläche (4b) umfasst, wobei die äußere Schicht (32), die einlagig oder mehrlagig ausgebildet ist, Papier, Karton oder ein anderes überwiegend zellulosebasiertes Material umfasst.

2. Versiegelte Einzeldosis-Verpackung (1) nach Anspruch 1, wobei der innere Einschnitt (20) mit dem äußeren Einschnitt (8) ausgerichtet, übereinandergelegt wird.

3. Versiegelte Einzeldosis-Verpackung (1) nach Anspruch 1 oder 2, wobei die flexible Folie (4) an dem schmalen Abschnitt (61) eine Falte (611), d.h. einen Falz, aufweist.

4. Versiegelte Einzeldosis-Verpackung (1) nach einem der vorhergehenden Ansprüche, wobei die halbstarre Folie (2) ein Paar von Schwächungsbereichen (40',40";42',42") an dem schmalen Abschnitt (61) der Tasche (6) aufweist, die mit dem äußeren Einschnitt (8) beidseitig des äußeren Einschnitts ausgerichtet sind.

5. Versiegelte Einzeldosis-Verpackung (1) nach Anspruch 4, wobei jeder Schwächungsbereich aus mindestens einem Einschnitt (40', 40") besteht.

6. Versiegelte Einzeldosis-Verpackung (1) nach Anspruch 4, wobei jeder Schwächungsbereich aus einer Vertiefung (42', 42") besteht, die entlang eines Umfangsrands (3) der halbstarren Folie (2) erhalten wird, und wobei die Schwächungsbereiche zentral in Bezug auf die Verpackung angeordnet sind, die eine Sanduhrgestalt annimmt.

7. Versiegelte Einzeldosis-Verpackung (1) nach Anspruch 4, wobei die halbstarre Folie (2) ein Paar Schwächungsbereiche in Form von Vertiefungen (42',42") gefolgt von einem Paar Schwächungsbereichen in Form von Einschnitten (40',40") aufweist, wobei sowohl die Einschnitte (40',40") als auch die Vertiefungen (42',42") mit dem äußeren Einschnitt (8) beidseitig des äußeren Einschnitts ausgerichtet sind.

8. Versiegelte Einzeldosis-Verpackung (1) nach Anspruch 6 oder 7, wobei die Vertiefungen (42',42") dreieckig mit der Spitze, die auf den äußeren Einschnitt (8) richtet, ausgebildet sind.

9. Versiegelte Einzeldosis-Verpackung (1) nach einem der vorhergehenden Ansprüche, wobei die flexible Folie (4) mit der halbstarren Folie (2) durch eine Schweißnaht (41) geschweißt wird, die einen Umfangsabschnitt (410) umfasst, der dem Umfangsrand (3) der halbstarren Folie (2) folgt, sowie ein Paar vorstehender Abschnitte (420), wobei die vorstehenden Abschnitte (420) einander zugewandt sind, mit dem äußeren Einschnitt (8), der in der halbstarren Folie (2) ausgebildet wird, ausgerichtet sind und sich zu der Tasche (6) erstrecken, die eine Sanduhrform aufweist.

10. Versiegelte Einzeldosis-Verpackung (1) nach Anspruch 9, wenn abhängig von Anspruch 4, wobei die Schwächungsbereiche (40',40";42',42") an den vorstehenden Abschnitten (420) der Schweißnaht (41) ausgebildet sind.

11. Versiegelte Einzeldosis-Verpackung (1) nach einem der vorhergehenden Ansprüche, wobei die halbstarre Folie (2) eine Sperrschicht (12) umfasst, die geeignet ist, eine Barriere gegen den Durchgang von Gas und/oder Dampf zu bilden.

12. Versiegelte Einzeldosis-Verpackung (1) nach Anspruch 11, wobei die Sperrschicht (12) eine Mikrobohrung aufweist, die von der Außenumgebung durch Zwischenschaltung eines Abschnitts der Sperrschicht (10) getrennt wird.

13. Versiegelte Einzeldosis-Verpackung (1) nach einem der vorhergehenden Ansprüche, wobei die Tasche (6) eine maximale Breite (L) aufweist, und der schmale Abschnitt (61) eine Breite zwischen 20 % und 95 % der maximalen Breite (L) aufweist.

14. Verfahren zur Herstellung einer versiegelten Einzeldosis-Verpackung (1) nach Anspruch 1, umfassend die folgenden Schritte:
- Anordnen einer rechteckigen mehrschichtigen halbstarren Folie (2), die durch einen Umfangsrand (3) begrenzt wird und die eine Rückfläche (2a) sowie eine gegenüberliegende Vorderfläche (2b) aufweist, wobei die halbstarre Folie (2) einen äußeren Einschnitt (8) aufweist, der an der Rückfläche (2a) ausgebildet ist;
- Anordnen einer flexiblen Folie (4) aufweisend eine Innenfläche (4a) und eine Außenfläche (4b);
- Übereinanderlegen der flexiblen Folie (4) auf der halbstarren Folie (2), sodass die Innenfläche (4a) der Vorderfläche (2b) zugewandt ist;
- Verschweißen der flexiblen Folie (4) mit der halbstarren Folie (2) durch eine Schweißnaht (41), die nach den folgenden Unterschritten erhalten wird:
- Ausbilden mindestens teilweises eines Umfangsabschnitts (410) der Schweißnaht (41), um die flexible Folie (4) und die halbstarre Folie (2) teilweise zu verbinden und die Tasche (6) teilweise zu bilden;
- Einfüllen einer vorbestimmten Produktmenge in die Tasche (6);
- Vervollständigen des Umfangsabschnitts (410) der Schweißnaht (41), um die Tasche (6) vollständig zu verschließen;
- Vervollständigen der Schweißnaht (41) durch Ausbilden von mindestens einem vorstehenden Abschnitt (420) zu der Tasche (6).

## Revendications

1. Un emballage unidose scellé (1) à ouverture par rupture, comprenant :
- une feuille semi-rigide multicouche (2) ayant une face arrière (2a) et une face avant opposée (2b), et comprenant une couche support (10) ayant ladite face arrière (2a), ladite couche support (10) étant en papier, carton ou autre matériau à base de cellulose en majorité ;
- une feuille souple (4), ayant une face interne (4a) et une face externe (4b), superposée à la feuille semi-rigide (2) de manière que la face interne (4a) soit tournée vers la face avant (2b), et soudée à la face avant (2b) de la feuille semi-rigide (2) de manière à former une poche interne (6) destinée à contenir une dose d'un produit ;
- une incision externe (8) s'étendant selon une direction d'incision (Y), réalisée dans la face arrière (2a) de la feuille semi-rigide (2), apte à guider, lors d'un pliage de l'emballage, une rupture de la feuille semi-rigide (2) pour former une ouverture permettant l'évacuation du produit contenu dans la poche (6) ;
- une incision interne (20) s'étendant selon une direction d'incision (Y), réalisée dans la face avant (2b) de la feuille semi-rigide (2) ;
**caractérisé en ce que** la poche (6) présente une portion étroite (61) alignée avec ladite incision externe (8), et **en ce que** ladite feuille souple (4) comprend une couche externe (32) ayant ladite face externe (4b), ladite couche externe (32), qui est monocouche ou multicouche, comprend du papier, du carton ou un autre matériau à base de cellulose en majorité.

2. Un emballage unidose scellé (1) selon la revendication 1, dans lequel l'incision interne (20) est alignée, superposée, avec l'incision externe (8)

3. Un emballage unidose scellé (1) selon la revendication 1 ou 2, dans lequel la feuille souple (4) présente un pli (611), c'est-à-dire, un repli, au niveau de la portion étroite (61).

4. Un emballage unidose scellé (1) selon l'une quelconque des revendications précédentes, dans lequel la feuille semi-rigide (2) présente une paire de portions fragilisées (40',40" ; 42',42") au niveau de la portion étroite (61) de la poche (6), alignées avec l'incision externe (8), de part et d'autre de ladite incision externe.

5. Un emballage unidose scellé (1) selon la revendication 4, dans lequel chaque portion fragilisée est constituée d'au moins une incision (40', 40").

6. Un emballage unidose scellé (1) selon la revendication 4, dans lequel chaque portion fragilisée est constituée d'un renfoncement (42', 42") obtenu le long d'un bord périphérique (3) de la feuille semi-rigide (2), et dans lequel lesdites portions fragilisées sont disposées de manière centrale par rapport à l'emballage, qui présente une forme de sablier.

7. Un emballage unidose scellé (1) selon la revendication 4, dans lequel la feuille semi-rigide (2) présente une paire de portions fragilisées sous forme de renfoncements (42',42") suivie d'une paire de portions fragilisées sous forme d'incisions (40',40"), lesdites incisions (40',40") et lesdits renfoncements (42',42") étant alignés avec l'incision externe (8), de part et d'autre de ladite incision externe.

8. Un emballage unidose scellé (1) selon la revendication 6 ou 7, dans lequel lesdits renfoncements (42',42") sont de forme triangulaire avec la pointe orientée vers l'incision externe (8).

9. Un emballage unidose scellé (1) selon l'une quelconque des revendications précédentes, dans lequel la feuille souple (4) est soudée à la feuille semi-rigide (2) par une soudure (41) comprenant une portion périphérique (410) qui suit le bord périphérique (3) de la feuille semi-rigide (2) et une paire de portions saillantes (420), lesdites portions saillantes (420) étant disposées face à face, alignées avec ladite incision externe (8) réalisée dans la feuille semi-rigide (2), et s'étendant vers la poche (6) qui présente une forme de sablier.

10. Un emballage unidose scellé (1) selon la revendication 9 lorsqu'elle dépend de la revendication 4, dans lequel lesdites portions fragilisées (40',40" ; 42',42") sont réalisées au niveau des portions saillantes (420) de la soudure (41).

11. Un emballage unidose scellé (1) selon l'une quelconque des revendications précédentes, dans lequel la feuille semi-rigide (2) comprend une couche barrière (12) apte à former une barrière contre le passage de gaz et/ou de vapeur.

12. Un emballage unidose scellé (1) selon la revendication 11, dans lequel la couche barrière (12) présente un micro-trou séparé de l'environnement extérieur par l'interposition d'une portion de la couche support (10)

13. Un emballage unidose scellé (1) selon l'une quelconque des revendications précédentes, dans lequel la poche (6) présente une largeur maximale (L), et la portion étroite (61) présente une largeur comprise entre 20 % et 95 % de la largeur maximale (L)

14. Un procédé de fabrication d'un emballage unidose scellé (1) selon la revendication 1, comprenant les étapes suivantes :
- disposer une feuille semi-rigide multicouche rectangulaire (2) délimitée par un bord périphérique (3) et ayant une face arrière (2a) et une face avant opposée (2b), ladite feuille semi-rigide (2) présentant une incision externe (8) réalisée sur la face arrière (2a) ;
- disposer une feuille souple (4) ayant une face interne (4a) et une face externe (4b) ;
- superposer la feuille souple (4) à la feuille semi-rigide (2) de sorte que la face interne (4a) soit tournée vers la face avant (2b) ;
- souder la feuille souple (4) à la feuille semi-rigide (2) par une soudure (41) réalisée selon les sous-étapes suivantes :
- réaliser au moins partiellement une portion périphérique (410) de la soudure (41) pour joindre partiellement la feuille souple (4) et la feuille semi-rigide (2) afin de former partiellement la poche (6) ;
- introduire une quantité prédéterminée de produit dans la poche (6) ;
- compléter la portion périphérique (410) de la soudure (41) pour fermer complètement la poche (6) ;
- compléter la soudure (41) en réalisant au moins une portion saillante (420) en direction de la poche (6).
